# EUROPÄISCHE PATENTSCHRIFT

(11) **EP 2 245 348 B1**
(45) Veröffentlichungstag und Bekanntmachung des Hinweises auf die Patenterteilung: **01.10.2014**
(21) Anmeldenummer: 09704179.2
(22) Anmeldetag: 14.01.2009
(51) Int. Cl.: F16K 15/03, F16K 15/14

(54) **RÜCKSCHLAGVENTIL UND KOLBENPUMPE MIT RÜCKSCHLAGVENTIL**
CHECK VALVE AND PISTON PUMP HAVING CHECK VALVE
SOUPAPE DE NON-RETOUR ET POMPE À PISTON À SOUPAPE DE NON-RETOUR

(30) Priorität: 21.01.2008 DE 102008006686
(43) Veröffentlichungstag der Anmeldung: 03.11.2010
(73) Patentinhaber: Prettl, Rolf, 72072 Tübingen (DE)
(72) Erfinder: BORST, Peter, 88527 Unlingen (DE); ENGEL, Markus, 72419 Neufra (DE)
(74) Vertreter: Steil, Christian
(86) Internationale Anmeldenummer: PCT/EP2009/000163
(87) Internationale Veröffentlichungsnummer: WO 2009/092537

(56) Entgegenhaltungen:
- DE-C- 408 499
- FR-A1- 2 695 965
- US-A- 3 312 237
- US-A- 5 245 956
- US-A- 5 518 026
- US-A1- 2005 206 227
- US-B1- 6 253 788

## Beschreibung

Die vorliegende Erfindung betrifft ein Rückschlagventil zur Anordnung zwischen einem ersten Druckraum, in dem ein erster Druck eines Fluides herrscht, und einem zweiten Druckraum, in dem ein zweiter Druck herrscht, mit einem Ventilgehäuse, an dem ein Ventilsitz ausgebildet ist, und mit einem Sperrelement, das in einer Sperrposition dazu ausgelegt ist, eine Ventilöffnung im Bereich des Ventilsitzes zu verschließen, um eine Verbindung zwischen dem ersten und dem zweiten Ventilraum zu sperren, wenn der zweite Druck größer ist als der erste Druck, und in einer Öffnungsposition dazu ausgelegt ist, die Ventilöffnung freizugeben, um die Verbindung zwischen dem ersten und dem zweiten Ventilraum freizugeben, wenn der erste Druck größer ist als der zweite Druck, wobei das Fluid in der Öffnungsposition entlang einer Strömungsrichtung von dem ersten Druckraum in den zweiten Druckraum strömen kann, wobei der Ventilsitz als Schrägfläche ausgebildet ist, die in Bezug auf die Strömungsrichtung unter einem Winkel größer als 15° und kleiner als 80° ausgerichtet ist, wobei das Sperrelement einen flächigen Sperrlappen aus einem elastisch verformbaren Material aufweist, der in der Sperrposition an der Schrägfläche anliegt und in der Öffnungsposition aufgrund der Differenz zwischen dem ersten Druck und dem zweiten Druck von der Schrägfläche abhebt, um die Verbindung freizugeben.

Die vorliegende Erfindung betrifft ferner eine Fluidpumpe mit einem Pumpengehäuse und einem darin verschieblich gelagerten Kolben, der mit dem Pumpengehäuse einen Druckraum bildet, wobei ein Sauganschluss der Pumpe über ein erstes Rückschlagventil mit dem Druckraum verbunden ist und wobei der Druckraum über ein zweites Rückschlagventil mit einem Druckanschluss der Pumpe verbunden ist.

Ein derartiges Rückschlagventil ist allgemein bekannt. Ein Rückschlagventil dient generell zur Richtungsbestimmung der Strömung eines Fluides und ist ein Wegeventil, das den Durchgang des Fluides in einer der zwei Strömungsrichtungen selbsttätig sperrt.

Durch die Maßnahme, den Ventilsitz als Schrägfläche auszubilden, kann das Fluid in der Öffnungsposition ungehinderter bzw. strömungstechnisch günstiger in den zweiten Druckraum strömen. Bei dem Übergang von der Sperrposition in die Öffnungsposition drückt das Fluid den flächigen Sperrlappen von dem Ventilsitz ab und kann entlang des so ausgelenkten Sperrlappens in den zweiten Druckraum strömen, ohne dass das Fluid hierbei gegenüber der Strömungsrichtung stark abgelenkt wird, wie dies beispielsweise bei klassischen Klappen-Rückschlagventilen der Fall ist.

Aus der US 6,253,788 B1 ist ein Rückschlagventil für ein Einfüllrohr eines Treibstofftanks eines Kraftfahrzeuges bekannt. Das Rückschlagventil weist ein Gehäuse und beweglich gelagerte, durch den einströmenden Treibstoff sich öffnende und selbsttätig wieder schließende Ventilklappen auf. Zum Befestigen der beiden Ventilklappen am Gehäuse ist ein Halter vorgesehen. Der Halter wiederum wird über entsprechende Rastelemente am Gehäuse verrastet.

Bekannt sind auch sogenannte Kugelrückschlagventile, bei denen das Sperrelement durch eine Kugel gebildet ist, die durch eine Feder in den Ventilsitz gedrückt wird.

In einer alternativen Ausführungsform ist der Ventilsitz senkrecht zur Strömungsrichtung angeordnet und durch eine Klappe verschlossen. Die Klappe kann dabei insbesondere an einem oberen Bereich aufgehängt werden, so dass sie aufgrund ihres Eigengewichtes selbsttätig in die Sperrstellung gelangt.

Problematisch bei derartigen Rückschlagventilen ist zum einen die große Anzahl von Bauteilen. Zum anderen wird, insbesondere bei dem Rückschlagventil mit Klappe, die Fluidströmung in der Öffnungsposition aufgrund der zunächst etwa senkrecht zur Strömungsrichtung ausgerichteten Klappe gestört. Dies führt zu einem relativ geringen Wirkungsgrad. Ferner sind die erzielbaren Frequenzen bei schnellem Wechsel von Sperrposition in Öffnungsposition und umgekehrt relativ niedrig.

Kolbenpumpen sind Pumpen zur Förderung von Fluiden, wobei mit dem Kolben in einem ersten Takt das zu fördernde Fluid durch ein Einlassventil angesaugt wird. Anschließend wird es in einem zweiten Takt durch das Auslassventil ausgestoßen. Eine solche Pumpe kann auch als Verdrängerpumpe bezeichnet werden.

Aufgrund der hohen erzielbaren Drücke ist es nicht ausgeschlossen, dass zwischen dem Kolben und dem Pumpengehäuse Fluid austritt. Dies kann in geschlossenen Kreisläufen unerwünscht sein. Ferner kann dies auch unerwünscht sein, wenn das Fluid dazu neigt, bei Stillstand auszukristallisieren oder Klumpen zu bilden. Dies gilt beispielsweise bei der Verwendung der Fluidpumpe zum Pumpen von Harnstoff. Derartige Pumpen werden in Harnstoffeinspritzsystemen verwendet, wie sie in Systemen zur Abgasreinigung von Dieselmotor betriebenen Fahrzeugen verwendet werden (sogenannte DNOX-Systeme).

Vor dem obigen Hintergrund ist es die Aufgabe der Erfindung, ein verbessertes Rückschlagventil sowie eine verbesserte Kolbenpumpe anzugeben, die eine geringere Anzahl von Bauteilen aufweisen.

Die obige Aufgabe wird gemäß der Erfindung bei dem eingangs genannten Rückschlagventil dadurch gelöst, dass das Sperrelement einen Befestigungsabschnitt aufweist, mittels dessen das Sperrelement an dem Ventilgehäuse befestigt ist, wobei der Befestigungsabschnitt einen Ringabschnitt aufweist, der in eine ringförmige Befestigungsausnehmung des Ventilgehäuses eingesetzt ist.

Das erfindungsgemäße Rückschlagventil weist einen schrägen Ventilsitz auf, an dem ein Sperrlappen aus elastisch verformbarem Material anliegt.

Von besonderem Vorteil ist es, dass das Sperrelement ohne weitere Maßnahmen auch in radialer Richtung an dem Ventilgehäuse fixiert werden kann. Dies kann insbesondere dann von Vorteil sein, wenn das Ventil an einem beweglichen Element wie einem Kolben angeordnet ist.

Zudem kommt das erfindungsgemäße Rückschlagventil mit wenigen Bauelementen aus. Vorzugsweise besteht das Ventil nur aus dem Ventilgehäuse und dem Sperrelement.

Die Ventilöffnung kann eine Mehrzahl von Einzelöffnungen beinhalten, die gemeinschaftlich von einem Sperrelement verschlossen werden. Bevorzugt sind die Ventilöffnungen dabei so zueinander angeordnet, dass sie in radialer Richtung gleich ausgerichtet sind, so dass das Fluid aus den Einzelöffnungen auf gleicher "Höhe" auf den Sperrlappen auftrifft.

Aufgrund der Ausbildung des Sperrlappens aus einem elastisch verformbaren Material kann erreicht werden, dass der Sperrlappen aufgrund der eigenen Elastizität in die Sperrposition vorgespannt ist. Demzufolge kann auch die Sperrposition generell sicher erreicht werden.

Die Funktion des erfindungsgemäßen Rückschlagventiles ähnelt der Funktion von Fischkiemen, die strömungstechnisch aufgrund der Evolution ebenfalls optimiert sind. Selbst bei vergleichsweise hohen Betätigungsfrequenzen des Rückschlagventiles ergibt sich hierbei keine Flatterneigung.

Die obige Aufgabe wird somit vollkommen gelöst.

Das erfindungsgemäße Rückschlagventil ist für vergleichsweise hohe Betätigungsgrenzen geeignet, beispielsweise für Betätigungsfrequenzen bis zu 60 oder 70 Hz.

Von besonderem Vorteil ist es, wenn der Winkel der Schrägfläche größer ist als 30°.

Hierdurch kann das Ventil strömungstechnisch noch weiter optimiert werden.

Gleiches gilt auch für den bevorzugten Fall, dass der Winkel der Schrägfläche kleiner ist als 60°.

Gemäß einer weiteren bevorzugten Ausführungsform ist das Sperrelement an einem in Strömungsrichtung gesehen hinteren Bereich der Schrägfläche an dem Ventilgehäuse festgelegt.

Auf diese Weise ist gewährleistet, dass der Sperrlappen gegenüber dem Befestigungsbereich schräg nach vorne ausgerichtet ist, also bereits etwa in Strömungsrichtung. Vorteilhaft ist es ferner, wenn der Ventilsitz zwei Schrägflächen aufweist, die in entgegengesetzter Richtung geneigt sind und im Längsschnitt eine V-Form bilden, wobei jeder Schrägfläche ein Sperrlappen zugeordnet ist.

Hierdurch kann bei relativ geringem Bauraum eine hohe Durchflussmenge erreicht werden. Das Ventil beinhaltet folglich zwei parallele Rückschlagventile. Auf diese Weise können auch die auftretenden Radialkräfte gegeneinander kompensiert werden. Daher eignet sich diese Ausbildung bevorzugt auch dann, wenn das Rückschlagventil Teil eines in Strömungsrichtung beweglichen Systems ist, beispielsweise an einem Kolben angeordnet ist.

Dabei ist es besonders von Vorteil, wenn die zwei Sperrlappen einstückig miteinander verbunden sind.

Hierdurch kann die Bauteilanzahl gering gehalten werden.

In einer Ausführungsform weist das Ventilgehäuse eine Befestigungsausnehmung auf, die quer zur Strömungsrichtung ausgerichtet ist, wobei der Befestigungsabschnitt in die Befestigungsausnehmung eingesetzt ist, um das Sperrelement in Strömungsrichtung formschlüssig an dem Ventilgehäuse festzulegen.

Auf diese Weise kann die Befestigung des Sperrelementes an dem Ventilgehäuse ohne weitere Bauteile oder Materialien erfolgen. Denkbar hierbei ist, dass das Sperrelement einen quer zur Strömungsrichtung verlaufenden Wulst aufweist, der in eine entsprechende quer verlaufende Ausnehmung des Ventilgehäuses eingesetzt ist, um eine axial formschlüssige Verbindung zu erzielen.

Ferner ist es hierbei vorteilhaft, wenn der Ringabschnitt über wenigstens einen Längsstegabschnitt mit dem Sperrlappen verbunden ist.

Dies ermöglicht eine einstückige Ausbildung des Sperrelementes, wobei der Längsstegabschnitt den Ringabschnitt und den Sperrlappen (oder die zwei Sperrlappen) miteinander verbindet.

Ferner ist es vorteilhaft, wenn der Längsstegabschnitt in einer längs ausgerichteten Ausnehmung des Ventilgehäuses angeordnet ist.

Hierdurch kann der Befestigungsabschnitt des Sperrelementes beispielsweise in eine Zylinderkontur des Ventilgehäuses integriert werden, ohne dass der Befestigungsabschnitt in radialer Richtung nach außen gegenüber der Zylinderkontur vorsteht. Insbesondere ist diese Ausbildung daher für die Verwendung des Rückschlagventils an einem beweglichen Element geeignet.

Hierbei ist es besonders vorteilhaft, wenn zwei Sperrlappen an einem Quersteg miteinander verbunden sind (beispielsweise in V-Form), dessen Enden jeweils über einen Längsstegabschnitt mit dem Ringabschnitt verbunden sind.

Diese Ausführungsform ermöglicht eine in axialer Richtung stabile Verbindung zwischen den Sperrlappen und dem Ringabschnitt.

Insgesamt ist es ferner bevorzugt, wenn das Ventilgehäuse einen Zylinderabschnitt aufweist, der wenigstens einen mit der Ventilöffnung verbundenen Längskanal aufweist, wobei der Ventilsitz an einer Stirnseite des Zylinderabschnittes ausgebildet ist, insbesondere in Strömungsrichtung gesehen vorne.

Diese Ausführungsform ermöglicht zum einen einen einfachen Gehäuseaufbau. Denn der zweite Druckraum kann hierbei beispielsweise durch den Zylinderabschnitt und einen zweiten Gehäuseabschnitt gebildet sein. Der Längskanal bildet dann vorzugsweise einen Teil des ersten Druckraumes. Ferner ist hier vorteilhaft, dass sich das Rückschlagventil auf einfache Weise in einen zylinderförmigen Kolben integrieren lässt, und zwar an dessen Stirnseite.

Gemäß der vorliegenden Erfindung wird die obige Aufgabe auch gelöst durch die eingangs genannte Fluidpumpe, wobei der Sauganschluss mit einem Ausgleichsraum verbunden ist, in den hinein Fluid gelangt, das zwischen dem Kolben und dem Pumpengehäuse austritt, und wobei das erste und/oder das zweite und/oder das dritte Rückschlagventil als Rückschlagventil gemäß der vorliegenden Erfindung ausgebildet ist.

Durch die Verbindung des Sauganschlusses mit dem Ausgleichsraum wird erreicht, dass das zwischen dem Kolben und dem Pumpengehäuse austretende Fluid zunächst in den Ausgleichsraum gelangt und dann in einem folgenden Ansaugtakt über den Sauganschluss wieder in den regulären Fluidverlauf von dem Sauganschluss in den Druckraum zurückgeführt wird. Das in dem Ausgleichsraum zunächst aufgenommeaufgenommene Fluid verbleibt folglich nicht in diesem Ausgleichsraum sondern wird sofort wieder umgewälzt.

Die erfindungsgemäße Fluidpumpe eignet sich insbesondere für solche Fluide, die dazu neigen, bei Stillstand auszukristallisieren oder zu verklumpen. Insbesondere eignet sich die erfindungsgemäße Fluidpumpe folglich als Harnstoffpumpe, beispielsweise für ein Harnstoffeinspritzsystem zur Abgasreinigung von Dieselmotoren.

Zudem kommt das erfindungsgemäße Rückschlagventil mit wenigen Bauelementen aus.

Die obige Aufgabe wird somit auch durch die erfindungsgemäße Fluidpumpe vollkommen gelöst.

Gemäß einer bevorzugten Ausführungsform ist hierbei eine Kolbenstange des Kolbens im Bereich des Ausgleichsraumes durch eine Kolbenstangenöffnung hindurch aus dem Pumpengehäuse herausgeführt.

Dies ermöglicht insgesamt eine kompakte Konstruktion und eine einfache Integration des Ausgleichsraumes in das Pumpengehäuse. Ferner kann der Ausgleichsraum hierbei insbesondere konzentrisch zu der Kolbenstange angeordnet werden, so dass sich eine einfache Bauweise ergibt.

Besonders bevorzugt ist es hierbei, wenn eine Außenseite des Kolbens gegenüber der Kolbenstangenöffnung mittels einer flexiblen Dichtanordnung abgedichtet ist.

Hierdurch kann gewährleistet werden, dass das in den Ausgleichsraum eintretende Fluid nicht aus dem Pumpengehäuse heraus austreten kann. Mit anderen Worten kann hierdurch ein geschlossener Kreislauf erzielt werden, über den das zwischen dem Kolben und dem Pumpengehäuse austretende Fluid wieder zu dem Sauganschluss zurückgeführt wird.

Von besonderem Vorteil ist es dabei, wenn die Dichtanordnung einen Membranabschnitt aufweist.

Ein solcher Membranabschnitt kann regelmäßig elastisch ausgebildet sein und kann aufgrund dieser Elastizität die Pumpenwirkung der Pumpe unterstützen bzw. eine eigene Pumpwirkung erzeugen. Denn die Dichtanordnung wird bei Axialbewegungen des Kolbens mitgenommen, so dass sich hierdurch Volumenänderungen des Ausgleichsraumes ergeben können.

Dies kann insbesondere vorteilhaft sein, wenn als Fluid ein gasförmiges Fluid verwendet wird.

Ferner kann diese Pumpwirkung in besonders vorteilhafter Weise dann erreicht werden, wenn sich der Membranabschnitt in radialer Richtung zwischen einem Außenumfang des Kolbens und einem Innenumfang des Ausgleichsraumes erstreckt. Dies ermöglicht zudem eine einfache Konstruktion der flexiblen Dichtanordnung.

Gemäß einer weiteren Ausführungsform weist die flexible Dichtanordnung einen Balgenabschnitt auf, der sich um die Kolbenstange herum erstreckt.

Ein solcher Balgenabschnitt kann die Axialbewegungen des Kolbens ebenfalls aufnehmen, und zwar in axialer Richtung. Zudem kann die Abdichtung der Dichtanordnung gegenüber der Kolbenstangenöffnung aufgrund der axialen Ausrichtung konstruktiv einfach realisiert werden.

Generell ist die Verwendung eines Balgenabschnittes bevorzugt, wenn das Fluid nicht oder nur wenig kompressibel ist, wie beispielsweise eine Flüssigkeit (insbesondere Harnstoff). In diesem Fall kann durch die axial ausgerichtete Balgenkontur erreicht werden, dass sich das Volumen des Ausgleichsraumes bei Axialbewegungen des Kolbens nur wenig ändert. Hierbei kann nämlich eine zusätzliche bzw. eigene Pumpwirkung über den Ausgleichsraum unerwünscht sein, da das wenig kompressible Fluid die Dichtanordnung stark belasten kann.

Von besonderem Vorteil ist es daher, wenn der Balgenabschnitt eine Neutralzylinderkontur aufweist, deren Umfang dem Außenumfang des Kolbenabschnittes entspricht, der sich in den Ausgleichsraum hinein erstreckt.

Aufgrund der Neutralzylinderkontur kann erreicht werden, dass sich das Volumen des Ausgleichsraumes bei Kolbenbewegungen gar nicht oder nur wenig ändert. Demzufolge kann erreicht werden, dass die Dichtanordnung nur wenig belastet wird, insbesondere, wenn ein wenig kompressibles Fluid verwendet wird.

Gemäß einer weiteren bevorzugten Ausführungsform ist der Kolben gegenüber dem Pumpengehäuse mittels eines Ringdichtelementes abgedichtet, das eine zur Druckseite hin offene axiale Ringausnehmung aufweist, über die das unter Druck stehende Fluid eine ringförmige Dichtlippe in radialer Richtung nach innen drücken kann.

Hierbei ist vorteilhaft, dass die Dichtwirkung zwischen dem Kolben und dem Pumpengehäuse konstruktiv einfach erhöht werden kann. Ferner kann durch diese Maßnahme erreicht werden, dass eine radial innere Abnutzung der Dichtlippe (die radial innen an dem beweglichen Kolben anliegen kann) über die Lebensdauer der Fluidpumpe kompensiert wird.

Insgesamt ist es ferner vorteilhaft, wenn das Pumpengehäuse ein Hauptgehäuse, an dem der Kolben verschieblich gelagert ist, einen druckseitigen Deckel und einen saugseitigen Deckel aufweist, wobei die Deckel an axial gegenüberliegenden Enden mit dem Hauptgehäuse verbunden sind.

Auf diese Weise lässt sich das Pumpengehäuse konstruktiv einfach und kompakt realisieren. Zudem können die axial gegenüberliegenden Deckel neben der Ausbildung des Druckraumes einerseits und des Ausgleichsraumes andererseits weitere Funktionen übernehmen. Zudem ergibt sich eine einfache Montage.

So ist es von besonderem Vorteil, wenn das zweite Rückschlagventil an dem druckseitigen Deckel festgelegt ist.

Da das zweite Rückschlagventil auf diese Weise an dem druckseitigen Deckel vormontiert werden kann, ergibt sich eine einfache Montage.

Ferner ist es vorteilhaft, wenn das Hauptgehäuse eine Axialausnehmung aufweist, die mittels des saugseitigen Deckels verschlossen ist.

Die Axialausnehmung kann auf diese Weise zur Realisierung verschiedener Funktionen genutzt werden, wie nachstehend beschrieben.

So ist es von besonderem Vorteil, wenn die Axialausnehmung den Ausgleichsraum beinhaltet.

Folglich kann der Ausgleichsraum konstruktiv einfach realisiert werden.

Ferner ist es vorteilhaft, wenn in der Axialausnehmung ein Ringeinsatz aufgenommen ist.

Ein solcher Ringeinsatz kann ebenfalls verschiedene Funktionen erfüllen, insbesondere Dichtungsaufgaben an axial gegenüberliegenden Enden der Axialausnehmung.

So ist es von besonderem Vorteil, wenn der Ringeinsatz ein Ringdichtelement zur Abdichtung des Kolbens gegenüber dem Pumpengehäuse in axialer Richtung gegen einen Boden der Axialausnehmung festlegt.

Auf diese Weise kann das Ringdichtelement konstruktiv einfach in dem Pumpengehäuse montiert und festgelegt werden.

Ferner ist es vorteilhaft, wenn der Ringeinsatz mittels des saugseitigen Deckels in der Axialausnehmung festgelegt ist.

Beispielsweise können auf das Ringdichtelement wirkende Axialkräfte über den Ringeinsatz von dem saugseitigen Deckel aufgenommen werden.

Ferner ist es bevorzugt, wenn zwischen dem Ringeinsatz und dem saugseitigen Deckel eine Dichtanordnung festgelegt ist.

Dies ermöglicht zum einen eine Abdichtung des Pumpengehäuses. Zum anderen kann die Dichtanordnung Teil der flexiblen Dichtanordnung sein, die zur Abdichtung des Kolbens gegenüber der Kolbenstangenöffnung vorgesehen ist, wobei die Kolbenstangenöffnung in diesem Fall bevorzugt in dem saugseitigen Deckel ausgebildet ist.

Hierdurch kann die Bauteilanzahl weiter verringert werden.

Gemäß einer weiteren bevorzugten Ausführungsform ist das erste Rückschlagventil an dem Kolben festgelegt.

Hierdurch kann der gesamte Aufbau der Fluidpumpe vereinfacht werden. Das Rückschlagventil kann dabei vorzugsweise an einer Stirnseite des Kolbens angeordnet sein. Dies kann eine saugseitige Stirnseite sein, es ist jedoch bevorzugt die druckseitige Stirnseite.

Gemäß einer weiteren bevorzugten Ausführungsform ist im Bereich des Sauganschlusses ein drittes Rückschlagventil angeordnet.

Hierdurch kann erreicht werden, dass Fluid nicht aus dem Ausgleichsraum in Richtung eines Fluidreservoirs zurückströmen kann. Der Wirkungsgrad der Fluidpumpe kann hierdurch weiter erhöht werden.

Eine weitere vorteilhafte Ausführungsform der Fluidpumpe beinhaltet, die Kolbenstangenöffnung mit einem Verbraucher für unter Druck stehendes Gas zu verbinden.

Das durch die flexible Dichtanordnung von dem Ausgleichsraum abgetrennte und mit der Kolbenstangenöffnung verbundene Volumen ändert sich bei Axialbewegungen des Kolbens. Hierdurch kann als Sekundäreffekt der Kolbenbewegung Luft aus der Kolbenstangenöffnung ausgestoßen werden.

Diese Luft kann einem Verbraucher für unter Druck stehende Gase wie z.B. Luft zugeführt werden.

Von besonderem Vorzug ist es dabei, wenn die Kolbenstangenöffnung mit einem Gasführungskanal verbunden ist, der wenigstens einen aus dem Pumpengehäuse herausragenden Abschnitt der Kolbenstange umgibt.

Die Kolbenstange kann folglich nach der Art einer Luftlagerung geführt werden, so dass die auftretenden Reibungseffekt minimiert werden.

Die Luftlagerung bildet dabei einen "Gasverbraucher" im oben genannten Sinn.

Generell ist es auch denkbar, diese Pumpwirkung auf das mit der Kolbenstangenöffnung verbundene Volumen durch zusätzliche Verwendung von wenigstens einem, vorzugsweise zwei Rückschlagventilen dazu auszunutzen, ständig frisches Gas (frische Luft) anzusaugen und an einem anderen Ort (nach Gebrauch des Gases für die Luftfederung oder einen anderen Verbraucher) abzuführen.

Die Fluidpumpe kann zudem insgesamt weitgehend oder vollständig metallfrei ausgebildet sein. Das Pumpengehäuse kann aus Kunststoff bestehen. Gleiches gilt für den Ringeinsatz und das Ringdichtelement.

Auch der Kolben kann aus Kunststoff ausgebildet sein und das Sperrelement, das jedem der Rückschlagventile zugeordnet ist, kann ebenfalls aus einem elastischen Kunststoffmaterial ausgebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele sind in der Zeichnung dargestellt und werden in der nachfolgenden Beschreibung näher erläutert. Es zeigen:
- Fig. 1: eine schematische Längsschnittansicht durch eine erste Ausführungsform eines Rückschlagventiles in einer Sperrposition;
- Fig. 2: das Rückschlagventil der Fig. 1 in einer Öffnungsposition;
- Fig. 3: eine weitere Ausführungsform eines Rückschlagventiles im schematischen Längsschnitt;
- Fig. 4: eine Längsschnittansicht einer weiteren Ausführungsform eines erfindungsgemäßen Rückschlagventiles;
- Fig. 5: eine Schnittansicht entlang der Linie V-V in Fig. 4;
- Fig. 6: eine Seitenansicht eines inneren Teils des Rückschlagventils der Fig. 4;
- Fig. 7: eine weitere Seitenansicht des Teils des Rückschlagventils der Fig. 4 in einer Position um 90° gedreht gegenüber der Position der Fig. 6;
- Fig. 8: ein in dem Rückschlagventil der Fig. 4 bis 7 verwendetes Sperrelement in perspektivischer Darstellung;
- Fig. 9: ein in dem Rückschlagventil der Fig. 4 bis 7 verwendetes Teilgehäuse des Ventilgehäuses in perspektivischer Darstellung;
- Fig. 10: eine Längsschnittansicht durch eine Fluidpumpe gemäß einer Ausführungsform der vorliegenden Erfindung;
- Fig. 11: eine Längsschnittansicht durch einen Kolben der Fluidpumpe der Fig. 10;
- Fig. 12: eine Längsschnittansicht durch ein Ringdichtelement der Fluidpumpe der Fig. 10;
- Fig. 13: eine Längsschnittansicht durch eine Dichtanordnung der Fluidpumpe der Fig. 10;
- Fig. 14: eine schematische Darstellung der Funktion einer erfindungsgemäßen Fluidpumpe in einer Position zu Beginn eines Arbeitstaktes;
- Fig. 15: eine der Fig. 14 vergleichbare Darstellung während eines Arbeitstaktes;
- Fig. 16: eine der Fig. 14 vergleichbare Darstellung am Ende eines Arbeitstaktes;
- Fig. 17: eine der Fig. 14 vergleichbare Darstellung während eines Saugtaktes;
- Fig. 18: eine schematische Darstellung einer alternativen Dichtanordnung für eine erfindungsgemäße Fluidpumpe;
- Fig. 19: eine schematische Darstellung einer weiteren alternativen Dichtanordnung für eine erfindungsgemäße Fluidpumpe; und
- Fig. 20: eine schematische Darstellung einer am saugseitigen Ende der Fluidpumpe der Fig. 10 angebrachten Luftpumpenanordnung zur Luftlagerung eines Kolbenstangenabschnittes.

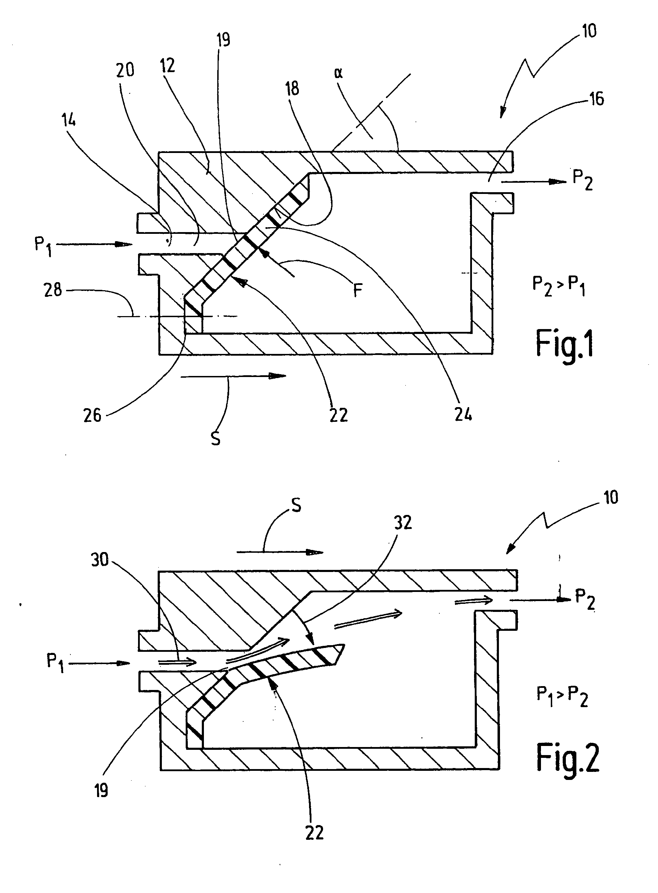

In Fig. 1 ist eine erste Ausführungsform eines erfindungsgemäßen Rückschlagventils generell mit 10 bezeichnet. Das Rückschlagventil 10 weist ein Ventilgehäuse 12 auf. Das Ventilgehäuse trennt einen ersten Druckraum 14, in dem ein Fluid einen ersten Fluiddruck P₁ besitzt, von einem zweiten Druckraum 16, in dem das Fluid einen zweiten Druck P₂ besitzt.

Im Inneren des Ventilgehäuses 12 ist ein Ventilraum ausgebildet, der mit dem zweiten Druckraum 16 verbunden ist.

Das Rückschlagventil richtet eine Strömungsrichtung S ein, über die Fluid von dem ersten Druckraum 14 in den zweiten Druckraum 16 gelangen kann. Die Strömungsrichtung S ist parallel zu einer Längserstreckung des Rückschlagventils 10.

Eine dem ersten Druckraum 14 zugewandte Seite des Ventilraumes ist als Ventilsitz 18 ausgebildet. Der Ventilsitz 18 ist dabei als Schrägfläche ausgebildet, die in Bezug auf die Strömungsrichtung S einen Winkel größer 15° und kleiner 80° einnimmt, insbesondere größer 30° und kleiner 60°, im vorliegenden Fall 45°.

An dem Ventilsitz 18 ist eine Ventilöffnung 19 ausgebildet, die über einen Längskanal 20 in dem Ventilgehäuse 12 mit dem ersten Druckraum 14 verbunden ist. Die Ventilöffnung 19 kann eine einzelne Ventilöffnung sein oder aus einer Mehrzahl von separaten Einzelöffnungen bestehen, die mit dem ersten Druckraum 14 verbunden sind.

Die Schrägfläche des Ventilsitzes 18 kann als plane Fläche ausgebildet sein, wie es in Fig. 1 dargestellt ist. Die Schrägfläche kann jedoch auch als gewölbte Fläche ausgebildet sein, die beispielsweise im Längsschnitt und/oder im Querschnitt konkav oder konvex ausgeformt ist.

In dem Ventilraum ist ferner ein Sperrelement 22 des Rückschlagventils 10 angeordnet. Das Sperrelement 22 ist aus einem elastisch verformbaren Material, insbesondere einem Kunststoffmaterial hergestellt und weist einen Sperrlappen 24 auf. Der Sperrlappen 24 ist hinsichtlich seiner Form an den Ventilsitz 18 angepasst, ist also im vorliegenden Fall als ebener Lappen ausgebildet (kann jedoch ein gewölbter Lappen sein).

Das Sperrelement 22 weist ferner einen einstückig mit dem Sperrlappen 24 ausgebildeten Befestigungsabschnitt 26 auf. Der Befestigungsabschnitt 26 ist in einem in Strömungsrichtung S gesehen hinteren Bereich des Ventilsitzes 18 an dem Ventilgehäuse 12 festgelegt. Hierzu verwendete Befestigungsmittel 28 sind in Fig. 1 schematisch dargestellt. Die Befestigungsmittel können beispielsweise gebildet sein durch eine oder mehrere Schrauben, Nieten oder ähnliches. Die Befestigungsmittel 28 können jedoch auch durch eine Verklebung gebildet sein. Alternativ ist es auch möglich, den Befestigungsabschnitt 26 im Zweikomponenten-Verfahren einstückig mit dem Ventilgehäuse 12 auszubilden.

Das Sperrelement 22 ist wie gesagt aus einem elastischen Material gebildet und ist über den Befestigungsabschnitt 26 so an dem Ventilgehäuse 12 angebracht, dass ein Sperrlappen 24 in einer entspannten Position (also nicht elastisch ausgelenkt) an dem Ventilsitz 18 anliegt. Alternativ ist es auch möglich, das Sperrelement so auszubilden, dass der Sperrlappen 24 mit einer gewissen Vorspannung in Richtung entgegengesetzt zu der Strömungsrichtung S an dem Ventilsitz 18 anliegt.

In Fig. 1 ist das Rückschlagventil 10 in einer Sperrposition gezeigt, bei der der zweite Druck P₂ größer ist als der erste Druck P₁. Hierdurch wird der Sperrlappen 24 gegen den Ventilsitz 18 angedrückt. Die Ventilöffnung 19 ist folglich geschlossen.

Es versteht sich, dass bei der obigen Betrachtung der Drücke auch der von dem Sperrelement 22 gegebenenfalls aufgebrachte Eigendruck entgegen der Strömungsrichtung S mit berücksichtigt sein kann.

In Fig. 2 ist das Rückschlagventil 10 in einer Öffnungsposition gezeigt. Hierbei ist der erste Druck P₁ größer als der zweite Druck P₂ (wiederum kann die eventuelle Vorspannkraft des Sperrlappens 24 mit einbezogen sein). Aufgrund des größeren Druckes P₁ drückt ein in dem ersten Druckraum 14 befindliches Fluid den Sperrlappen 24 von dem Ventilsitz 18 weg und lenkt diesen aus, wie es schematisch bei 32 gezeigt ist. Hierdurch kann das Fluid 30, wie es durch Doppelpfeile gezeigt ist, von dem ersten Fluidraum 14 in den zweiten Fluidraum 16 strömen. Dabei trifft das Fluid 30 nicht frontal sondern schräg auf die dem ersten Druckraum 14 zugewandte Seite des Sperrlappens 24 auf, so dass es strömungstechnisch günstig von dem ersten Fluidraum 14 in den zweiten Fluidraum 16 geleitet werden kann. Insbesondere ergeben sich nur wenige Verwirbelungen und sonstige strömungstechnisch ungünstige Phänomene. Mit anderen Worten wird der Sperrlappen 24 schräg bzw. seitlich angeströmt, ähnlich wie Kiemen eines Fisches.

Insgesamt kann mit dem Rückschlagventil eine hohe Betätigungsfrequenz erreicht werden, beispielsweise größer 50 Hz, ohne dass ein Flattern des Sperrelementes auftritt. Die Form des Sperrlappens 24 kann ferner so gewählt sein, dass bei einer Druckumkehr zur Einleitung eines Saugtaktes ein Zurückdrücken des Sperrlappens in Richtung gegen den Ventilsitz 18 begünstigt wird (beispielsweise durch geeignete Ausformung eines vorderen Endes des Sperrlappens, wie es in Fig. 2 schematisch angedeutet ist.

Nachstehend werden weitere alternative Ausführungsformen von erfindungsgemäßen Rückschlagventilen erläutert. Diese entsprechen hinsichtlich dem generellen Aufbau und der generellen Funktionsweise dem oben beschriebenen Rückschlagventil 10 der Fig. 1 und 2. Im Folgenden werden lediglich Unterschiede erläutert.

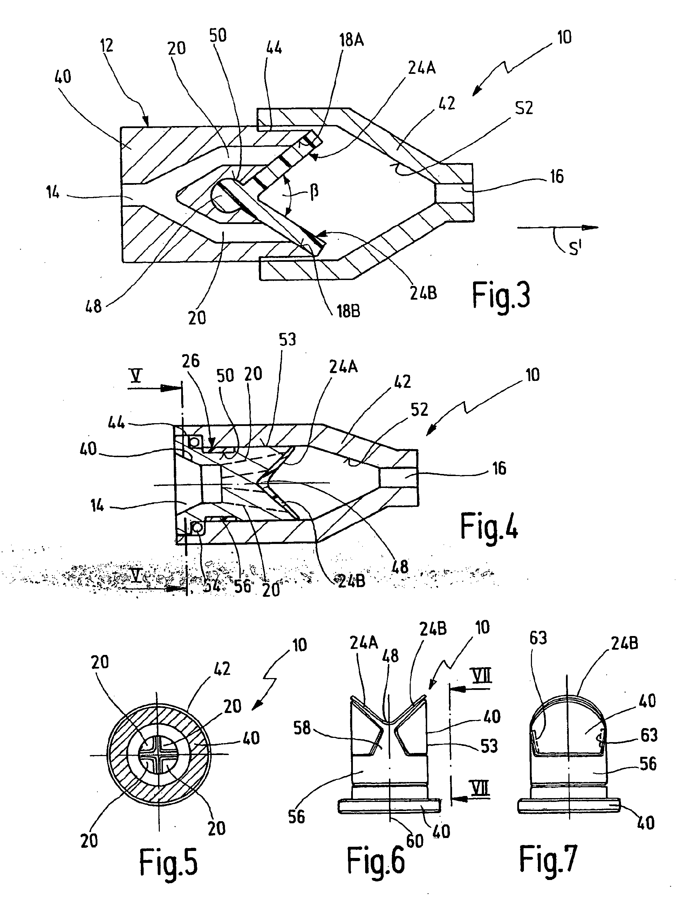

Fig. 3 zeigt eine alternative Ausführungsform eines Rückschlagventiles, das ein Ventilgehäuses 12 mit einem ersten Teilgehäuse 40 und einem zweiten Teilgehäuse 42 aufweist, die beispielsweise über einen Gewindeeingriff 44 oder Ähnliches miteinander verbunden sind.

Ferner weist das Rückschlagventil 10 der Fig. 3 ein Sperrelement 22 auf, das zwei Sperrlappen 24A, 24B beinhaltet, die vorzugsweise einstückig miteinander verbunden sind. Die Sperrlappen 24A, 24B liegen an entsprechenden Ventilsitzen 18A, 18B des ersten Teilgehäuses 40 an, die gegenüber der Strömungsrichtung S in entgegengesetzter Richtung geneigt sind. Demgemäß sind die Ventilsitze 18A, 18B bzw. die Sperrlappen 24A, 24B V-förmig angeordnet und schließen eine Winkel β ein, der vorzugsweise größer ist als 40° und kleiner als 150°.

Jedem der Ventilsitze 18A, 18B ist ein eigener Längskanal 20 zugeordnet, wobei die Längskanäle 20 jeweils mit dem ersten Druckraum 14 verbunden sind. In Fig. 3 sind zwei Längskanäle 20 dargestellt, also ein Längskanal 20 pro Sperrlappen 24. Es können jedoch auch pro Sperrlappen 24 mehrere Längskanäle 20 (und entsprechende Ventilöffnungen) vorgesehen sein.

Ferner sind die zwei Sperrlappen 24A, 24B einstückig miteinander verbunden, zwar über einen Quersteg 48. In der dargestellten Ausführungsform ist der Quersteg 48 im Längsschnitt wulstförmig ausgebildet und ist in Querrichtung (senkrecht zur Darstellungsebene) in eine Befestigungsausnehmung 50 des ersten Teilgehäuses 40 eingeschoben. Hierdurch kann das Sperrelement 22 ohne weitere Befestigungsmittel in Strömungsrichtung S formschlüssig mit dem ersten Teilgehäuse 40 verbunden werden.

Der mit dem zweiten Druckraum 16 verbundene Ventilraum ist in dieser Ausführungsform zwischen dem ersten und dem zweiten Teilgehäuses 40, 42 ausgebildet. Das zweite Ventilgehäuse 42 kann dabei eine Konusfläche 52 beinhalten, die sich in Strömungsrichtung verjüngt, hin zu dem zweiten Druckraum 16. Hierdurch kann die Strömung des Fluides 30 in der Öffnungsposition hinsichtlich strömungstechnischer Gesichtpunkte noch weiter optimiert werden.

Fig. 4 zeigt eine weitere Ausführungsform eines erfindungsgemäßen Rückschlagventiles, das generell hinsichtlich Aufbau und Funktion dem Rückschlagventil der Fig. 3 entspricht.

Es ist zu erkennen, dass das erste Teilgehäuse 40 einen Zylinderabschnitt 53 aufweist, an dem das Sperrelement 22 festgelegt ist. Ferner sind das erste Teilgehäuse 40 und das zweite Teilgehäuse 42 über eine Dichtung 54 miteinander verbunden.

Ferner unterscheidet sich das Rückschlagventil der Fig. 4 von jenem der Fig. 3 durch die Art der Ausbildung des Befestigungsabschnittes 26. Während bei der Ausführungsform der Fig. 3 der Befestigungsabschnitt durch einen Quersteg mit Wulstform ausgebildet ist, ist bei der Ausführungsform der Fig. 4 ein Befestigungsabschnitt 26 vorgesehen, der einen Ringabschnitt 56 aufweist. Der Ringabschnitt 56 ist in einer um den Zylinderabschnitt 53 umlaufenden ringförmigen Befestigungsausnehmung 50 aufgenommen, so dass der Ringabschnitt 56 in radialer Richtung nicht gegenüber der Außenkontur des Zylinderabschnittes 53 hervortritt. Der Ringabschnitt 56 ist mit den einstückig verbundenen Sperrlappen 24A, 24B über Längsstegabschnitte verbunden, die nachstehend beschrieben werden.

In Fig. 5 ist zu erkennen, dass an dem ersten Teilgehäuse 40 vier Längskanäle 20 ausgebildet sind, wobei jeweils zwei Längskanäle einem Sperrlappen 24A, 24B zugeordnet sind.

In Fig. 6 ist zu erkennen, dass der Ringabschnitt 56 auf radial gegenüberliegenden Seiten jeweils über einen Längsstegabschnitt 58 mit einem jeweiligen Ende des Quersteges 48 verbunden ist, der die Sperrlappen 24A, 24B miteinander verbindet. Die Längsstegabschnitte 58 sind vorzugsweise an dem ersten Teilgehäuse 40 so aufgenommen, dass sie gegenüber einer Außenkontur des Zylinderabschnittes 53 nicht hervortreten.

Hierzu sind radiale Ausnehmungen an dem Außenumfang des ersten Teilgehäuses 40 vorgesehen, wie es in Fig. 7 bei 63 gezeigt ist.

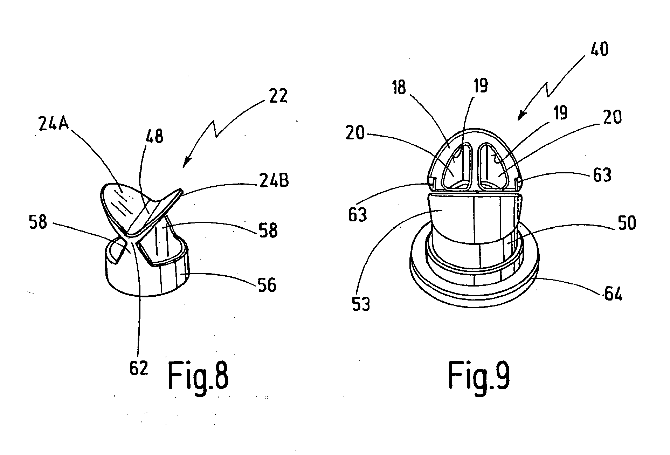

In den Fig. 8 und 9 sind das Sperrelement 22 und das erste Teilgehäuse 40 jeweils separat dargestellt, um die oben beschriebenen Funktionen zu verdeutlichen. Man erkennt in Fig. 9 ferner, dass das erste Teilgehäuse an seinem hinteren Ende einen gegenüber dem Zylinderabschnitt 53 radial vorstehenden Flanschabschnitt 64 aufweist, mittels dessen das erste Teilgehäuse 40 mit dem zweiten Teilgehäuse 42 verbunden und gegenüber diesem abgedichtet werden kann, wie es in Fig. 4 zu sehen ist.

Die oben beschriebenen Ausführungsformen von Rückschlagventilen lassen sich sämtlich als stationäre, unbewegliche Rückschlagventile in einer beliebigen Anwendung verwenden. Als Fluid kommen sowohl flüssige als auch gasförmige Stoffe in Betracht. Aufgrund der Zylinderform des ersten Teilgehäuses 40 kann das erste Teilgehäuse 40 jedoch auch als Kolben, d.h. als bewegliches Element ausgebildet sein, das gegenüber einem zweiten stationären Gehäuse abgedichtet ist. Bei dieser Ausführungsform kann das erfindungsgemäße Rückschlagventil insbesondere in einer Kolbenpumpe verwendet werden.

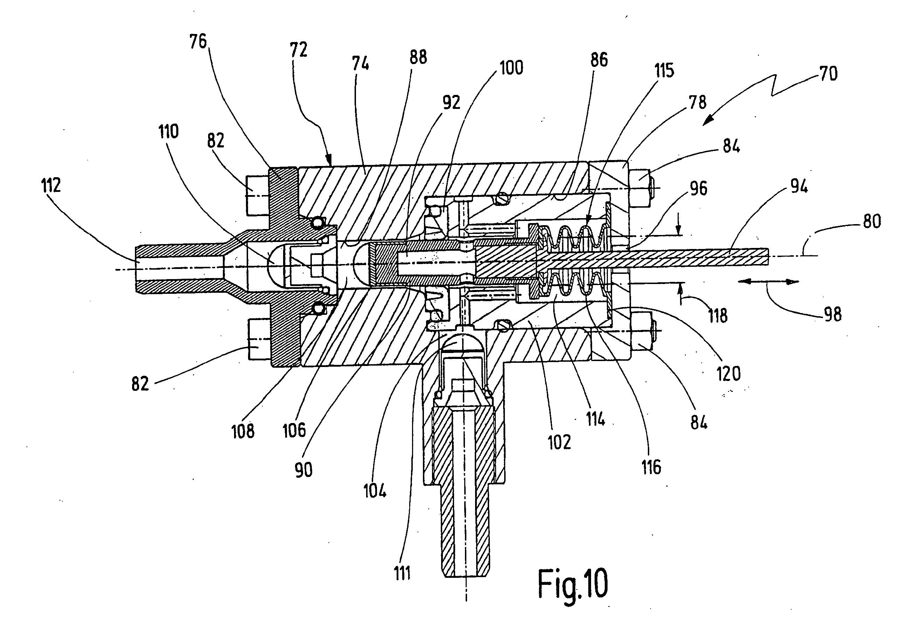

Eine bevorzugte Ausführungsform einer erfindungsgemäßen Kolbenpumpe ist in Fig. 10 mit 70 bezeichnet.

Die als Fluidpumpe 70 ausgebildete Kolbenpumpe weist ein Pumpengehäuse 72 auf. Das Pumpengehäuse 72 beinhaltet ein Hauptgehäuse 74 sowie einen druckseitigen Deckel 76 und einen saugseitigen Deckel 78, die an axial gegenüberliegenden Enden an dem Hauptgehäuse 74 angebracht sind. Eine Längsachse des Pumpengehäuses 72 ist bei 80 gezeigt.

Zur Verbindung der Gehäuseteile 74, 76, 78 sind durchgehende Verbindungsbolzen 82 vorgesehen, wobei die Gehäuseteile 74, 76, 78 in axialer Richtung durch entsprechende Muttern 84 axial aneinander festgelegt werden. Im dargestellten Fall weist das Pumpengehäuse 72 vier Verbindungsbolzen 82 und zugehörige Muttern 84 auf, von denen in Fig. 10 nur zwei dargestellt sind.

Im Bereich des saugseitigen Deckels 78 weist das Hauptgehäuse 74 eine Axialausnehmung 86 auf. Die Axialausnehmung 86 ist über eine Kolbenführung 88 mit dem gegenüberliegenden Ende des Hauptgehäuses 74 durchgängig verbunden. In der Kolbenführung 88 ist ein Kolben 90 in Längsrichtung verschieblich geführt.

Der Kolben 90 weist einen Längskanal 92 auf, der zur Saugseite hin offen ist. In dieses offene Ende ist von der Saugseite her eine Kolbenstange 94 eingesetzt, die über eine geeignete Dichtung (nicht dargestellt) mit dem Kolben 90 verbunden ist. In dem saugseitigen Deckel 78 ist eine Öffnung 96 ausgebildet, durch die hindurch sich die Kolbenstange 94 aus dem Pumpengehäuse 72 heraus erstreckt. Bei 98 ist in schematischer Form ein Aktuator angedeutet, mittels dessen die Kolbenstange 94 in Längsrichtung hin und her bewegbar ist.

In die Axialausnehmung 86 ist ein Ringdichtelement 100 eingesetzt. Dieses liegt an einem Boden der Axialausnehmung 86 an, also hin zur Druckseite. Das Ringdichtelement 100 umschließt dabei den Kolben 90 und sorgt für eine Abdichtung des Kolbens 90 gegenüber dem Pumpengehäuse 72. In die Axialausnehmung 86 ist ferner ein Ringeinsatz 102 eingesetzt, der am Innenumfang der Axialausnehmung 86 anliegt und sich in axialer Richtung von dem saugseitigen Deckel 78 bis hin zu dem Ringdichtelement 100 erstreckt. Das Ringdichtelement 100 ist folglich in axialer Richtung zwischen dem Boden der Axialausnehmung 86 und dem druckseitigen Ende des Ringeinsatzes 102 festgelegt. Der Ringeinsatz 102 ist gegenüber dem Hauptgehäuse 74 mittels einer nicht näher bezeichneten Dichtung abgedichtet.

An dem Hauptgehäuse 74 ist ein Sauganschluss 104 ausgebildet, und zwar etwa in der Mitte hiervon. Der Sauganschluss 104 ist dabei radial ausgerichtet und mündet in die Axialausnehmung 86. In dem Ringeinsatz 102 sind Querkanäle ausgebildet, über die der Sauganschluss 104 mit dem Inneren des Ringeinsatzes 102 verbunden ist. Ferner ist an dem Kolben 90 wenigstens eine Querausnehmung ausgebildet, über die das Innere des Ringeinsatzes 102 mit dem Längskanal 92 verbunden werden kann. In diesem Fall ist der Längskanal 92 über geeignete Mittel wie die beschriebenen Querkanäle mit dem Sauganschluss 104 verbunden.

An dem druckseitigen Ende des Kolbens 90 ist ein erstes Rückschlagventil 106 ausgebildet. Das Rückschlagventil 106 ist so ausgerichtet, dass eine Fluidströmung in Richtung hin zur Druckseite möglich ist, eine Rückströmung jedoch nicht möglich ist. Das erste Rückschlagventil 106 kann dabei ausgebildet sein wie eines der Rückschlagventile 10 der Fig. 4 bis 9. Der Kolben 90 bildet in diesem Fall das Ventilgehäuse 12 bzw. das erste Teilgehäuse 40.

Zwischen dem druckseitigen Ende des Kolbens 90 und dem druckseitigen Deckel 76 ist ein Druckraum 108 ausgebildet.

An dem druckseitigen Deckel 76 ist ein durchgehender Kanal ausgebildet, der in einen Druckanschluss mündet. Zwischen dem Druckanschluss 112 und dem Druckraum 108 ist ein zweites Rückschlagventil 110 angeordnet. Dieses ist bevorzugt an dem druckseitigen Deckel 76 festgelegt. Das zweite Rückschlagventil 110 kann ebenfalls als Rückschlagventil 10 gemäß einer der Fig. 4 bis 9 ausgebildet sein und ist so angeordnet, dass eine Strömung von dem Druckraum 108 zu dem Druckanschluss 112 möglich ist, eine umgekehrte Fluidströmung jedoch unterbunden wird.

Im Bereich des Sauganschlusses 104 kann ferner ein drittes Rückschlagventil 111 ausgebildet sein, das ebenfalls eine Strömung von dem Eingang hin zu dem Sauganschluss 104 und folglich hin zu dem Längskanal 92 zulässt, eine Rückströmung jedoch unterbindet. Das dritte Rückschlagventil 111 ist optional zur Verbesserung des Wirkungsgrades vorgesehen, ist jedoch für die Funktion nicht unbedingt notwendig.

In der Axialausnehmung 86, genauer innerhalb des Ringeinsatzes 102 ist ferner ein Ausgleichsraum 114 vorgesehen. Der Ausgleichsraum 114 dient zur Aufnahme von Fluid, das während eines Arbeitstaktes aus dem Druckraum 108 zwischen dem Kolben 90 und dem Ringdichtelement 100 zurückströmt (aufgrund der nicht notwendigerweise immer 100%-igen Dichtwirkung des Ringdichtelementes 100 bzw. aufgrund der relativ hohen Drücke innerhalb des Druckraumes 108). Dieses austretende Fluid wird dann über Quer- und Längskanäle in dem Ringeinsatz 102 in den Ausgleichsraum 114 gedrückt. Der Ausgleichsraum 114 ist ferner über Längs- und Querkanäle in dem Ringeinsatz 102 mit dem Sauganschluss 104 verbunden. Demzufolge kann während eines Arbeitstaktes in den Ausgleichsraum 114 eintretendes Fluid während eines anschließenden Saugtaktes aus dem Ausgleichsraum 114 abgesaugt und in den regulären Strömungsverlauf (über den Längskanal 92 in den Druckraum 108 hinein) zugeführt werden.

Zur Abdichtung der Öffnung 96 ist eine flexible Dichtanordnung 115 vorgesehen, die die Außenseite des Kolbens bzw. den Kolben insgesamt gegenüber der Öffnung 96 abdichtet. Hierdurch wird verhindert, dass in den Ausgleichsraum 114 eintretendes Fluid über die Öffnung 96 nach außen gelangt. Die Dichtanordnung 115 ist dabei dazu ausgelegt, Bewegungen des Kolbens 90 in Bezug auf das Pumpengehäuse 72 aufzunehmen. Im vorliegenden Fall weist die flexible Dichtanordnung 115 einen Balgenabschnitt 116 auf, der konzentrisch zu der Kolbenstange 94 angeordnet ist. Ein Ende des Balgenabschnittes 116 ist mit einem hinteren Ende des Kolbens 90 verbunden. Das andere Ende ist an einer axialen Innenseite des saugseitigen Deckels 78 festgelegt, derart, dass der Innenraum des Balgenabschnittes 116 mit der Außenseite des Pumpengehäuses 72 verbunden ist (über die Öffnung 96).

Der Balgenabschnitt 116 weist dabei eine Neutralzylinderkontur 118 auf, wobei sich jeweils äußere Halbwellen der Balgenkontur außerhalb der Neutralzylinderkontur 118 und innere Halbwellen der Balgenkontur innerhalb der Neutralzylinderkontur 118 erstrecken.

Der Umfang der Neutralzylinderkontur 118 ist dabei auf den Außenumfang des Kolbens 90 abgestimmt, derart, dass das Volumen des Ausgleichsraumes 114 bei Axialbewegungen des Kolbens 90 nicht oder nur unwesentlich verändert wird. Demzufolge wird insbesondere bei Verwendung eines flüssigen Fluides (wie beispielsweise Harnstoff) über den Ausgleichsraum 114 keine wesentliche Kraft auf den Balgenabschnitt 116 bzw. die Dichtanordnung 115 ausgeübt. Demzufolge kann die Dichtanordnung 115 sehr flexibel ausgebildet werden, ohne die Gefahr, dass die Anordnung aufgrund von Volumenänderungen beschädigt oder sonst wie negativ beeinflusst wird.

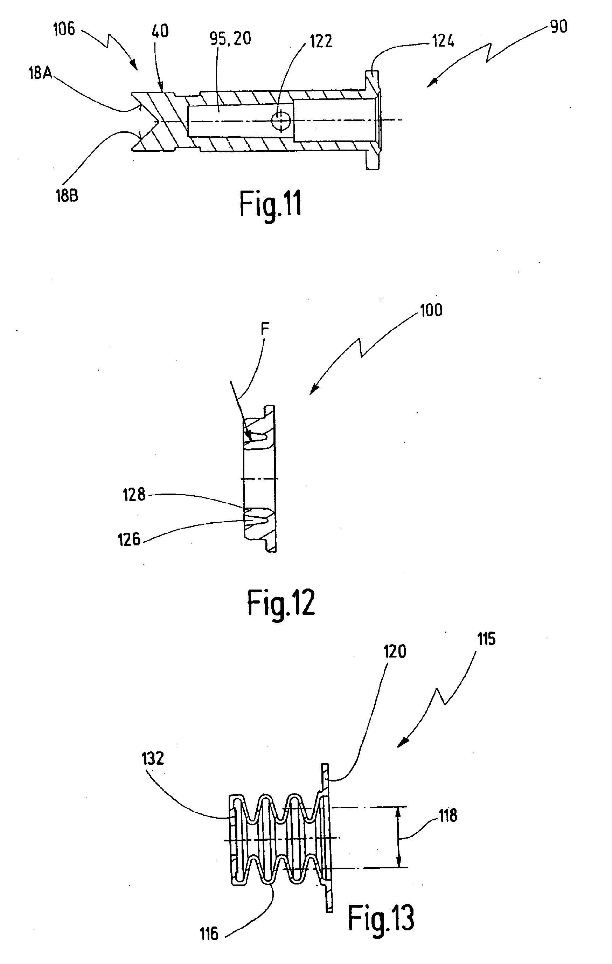

In den Fig. 11 bis 13 sind Einzelteile der Fluidpumpe 70 dargestellt. So ist in Fig. 11 der Kolben 90 dargestellt und es ist zu erkennen, dass dieser am vorderen Ende Ventilsitze 18A, 18B aufweist (vergleichbar den Ventilsitzen der Ausführungsform des Rückschlagventils der Fig. 4). Ferner ist zu erkennen, dass der Längskanal 92 im Wesentlichen dem Längskanal 20 des Rückschlagventils der Fig. 4 bis 9 entspricht. In Fig. 11 ist bei 122 ferner ein Querkanal gezeigt, der den Längskanal 92 mit dem Sauganschluss 104 verbindet. An dem saugseitigen Ende des Kolbens 90 ist ferner ein Flanschabschnitt 124 ausgebildet. Dieser kann zum einen als Anschlag für den Kolben 90 in Bezug auf das Pumpengehäuse 72 (bzw. in Bezug auf den Ringeinsatz 102) dienen. Zum anderen dient der Flanschabschnitt 124 dazu, ein druckseitiges Ende des Balgenabschnittes 116 festzulegen, und zwar zwischen dem Flanschabschnitt 124 und einem entsprechenden Flanschabschnitt der Kolbenstange 94.

In Fig. 12 ist das Ringdichtelement 100 dargestellt. Das Ringdichtelement 100 weist zur Druckseite hin eine axiale Ringausnehmung 126 auf, derart, dass an dem Außenumfang des in Fig. 12 nicht dargestellten Kolbens eine ringförmige Dichtlippe 128 anliegt, die sich von der Saugseite zur Druckseite hin erstreckt.

Sofern in dem Druckraum 108 ein hoher Druck herrscht, so dass Fluid zwischen dem Kolben 90 und der Kolbenführung 88 zur Saugseite hin gedrückt wird, führt dieser Druck dazu, dass auf die ringförmige Dichtlippe 128 eine radiale Kraft F ausgeübt wird. Die radiale Kraft F drückt folglich die ringförmige Dichtlippe 128 in radialer Richtung gegen den Außenumfang des Kolbens 90.

Durch diese Ausbildung des Ringdichtelementes 100 kann zum einen eine hohe Dichtwirkung erzielt werden. Zum anderen kann auch ein über die Lebensdauer auftretender Verschleiß an dem Innenumfang der Dichtlippe 128 kompensiert werden.

In Fig. 13 ist die flexible Dichtanordnung 115 mit dem Balgenabschnitt 116 gezeigt.

Dabei ist der Dichtflansch 120 zu erkennen, der im zusammengebauten Zustand zwischen dem saugseitigen Ende des Ringeinsatzes 102 und der Innenseite des saugseitigen Deckels 78 festgelegt wird. Ferner ist in Fig. 13 ein weiterer axial gegenüberliegender Dichtflansch 132 der Dichtanordnung 115 zu erkennen, wobei der weitere Dichtflansch 132 zwischen dem Flanschabschnitt 124 des Kolbens 90 und einem entsprechenden Flanschabschnitt der Kolbenstange 94 festgelegt wird, um für eine geeignete Abdichtung des Ausgleichsraumes 114 zu sorgen.

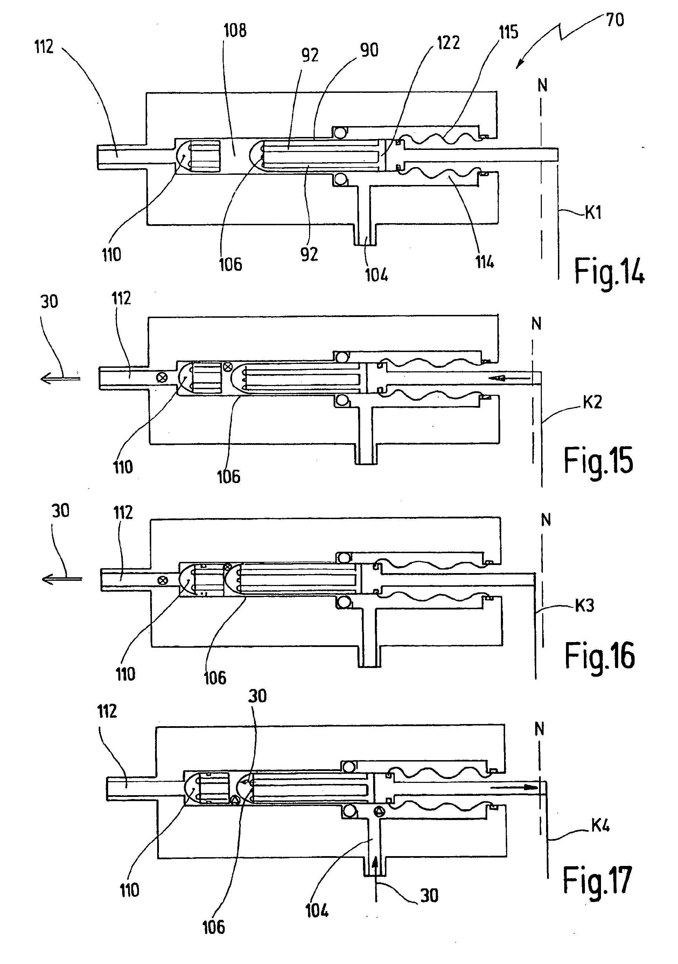

In den Fig. 14 bis 17 ist die Funktionsweise einer erfindungsgemäßen Fluidpumpe 70 dargestellt, die hinsichtlich Aufbau und Funktionsweise generell der Fluidpumpe 70 der Fig. 10 entspricht.

Dabei ist in Fig. 14 eine Endposition des Kolbens 90 gezeigt, die zu Beginn eines Arbeitstaktes eingenommen wird. Diese Kolbenposition K1 liegt folglich in axialer Richtung hinter einer Neutralposition N. In dieser Position ist die Dichtanordnung 115 in axialer Richtung maximal komprimiert.

In Fig. 15 ist gezeigt, dass der Kolben zur Druckseite hin bewegt wird (Kolbenposition K2). Hierbei entsteht in dem Druckraum 108 ein Druck, der größer ist als der Fluiddruck am Druckanschluss 112, so dass das Fluid über das zweite Rückschlagventil 110 zum Druckanschluss 112 ausgestoßen wird.

In Fig. 16 ist die Endposition des Arbeitstaktes gezeigt (Kolbenposition K3), bei der das Fluid 30 so weit wie möglich aus dem Druckraum 108 über das zweite Rückschlagventil 110 zur Druckseite hin abgeführt worden ist. Die dargestellten Kreuzsymbole zeigen jeweils an, dass gegenüber anderen Orten der Fluidpumpe 70 ein höherer Druck herrscht. In Fig. 16 ist die flexible Dichtanordnung 115 in maximaler Weise gestreckt.

Fig. 17 zeigt die Fluidpumpe 70 während eines nachfolgenden Saugtaktes. Hierbei wird der Kolben 70 in axialer Richtung zurückbewegt (Kolbenposition K4). Dabei schließt das zweite Rückschlagventil 110 und es entsteht in dem Druckraum 108 ein Unterdruck (durch ein Dreieckssymbol dargestellt). Hierdurch öffnet das erste Rückschlagventil 106 und der entsprechende Unterdruck ist auch an dem Sauganschluss 104 vorhanden, so dass Fluid 30 über den Sauganschluss 104 und die Längskanäle 92 in den Druckraum 108 einströmt, wie es in Fig. 17 durch Doppelpfeile gezeigt ist.

Hierdurch wird der Druckraum 108 erneut befüllt, so dass wiederum die Situation der Fig. 14 entsteht und ein neuer Arbeitstakt eingeleitet werden kann.

Während des Arbeitstaktes und während des Saugtaktes bleibt das Volumen des Ausgleichsraumes 114 zumindest annähernd konstant, so dass auf die flexible Dichtanordnung 115 keine wesentlichen Kräfte ausgeübt werden.

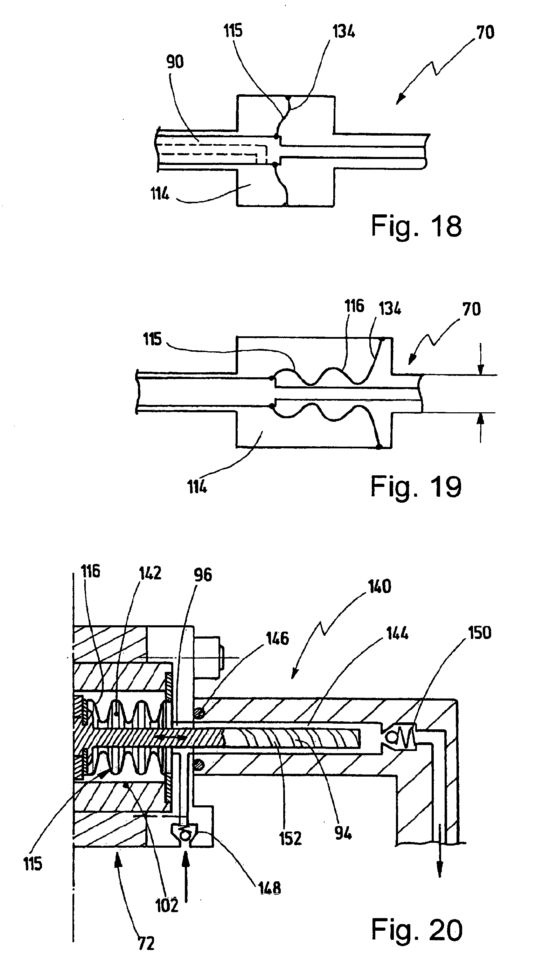

Fig. 18 zeigt eine alternative Ausführungsform einer flexiblen Dichtanordnung 115, und zwar in Form eines Membranabschnittes 134, der sich von einem Außenumfang des Kolbens 90 hin zu einem Innenumfang des Ausgleichsraumes 114 erstreckt.

Bei dieser Ausführungsform ändert sich bei Bewegungen des Kolbens 90 das Volumen des Ausgleichsraumes 114. Dadurch wirkt der Ausgleichsraum 114 als Pumpraum. Der Membranabschnitt 134 ist in entsprechender Weise auszulegen. Bevorzugt wird diese Ausführungsform bei Verwendung von gasförmigen Fluiden eingesetzt.

Fig. 19 zeigt eine weitere alternative Ausführungsform einer Dichtanordnung 115, die einen Balgenabschnitt 116 und einen Membranabschnitt 134 aufweist.

Bei dieser Ausführungsform ist die Verwendung von gasförmigen oder flüssigen Fluiden denkbar. Bei Auftreten eines hohen Druckes auf den Membranabschnitt 134 kann sich dieser dabei an eine Innenseite des Ausgleichsraumes 114 anlegen (beispielsweise an die Innenseite des saugseitigen Deckels 78). Die Belastung des Membranabschnittes kann folglich begrenzt werden.

Hierdurch kann eine gewisse Pumpwirkung über den Ausgleichsraum 114 erfolgen, ohne jedoch die Dichtanordnung 115 übermäßig zu beanspruchen.

Fig. 20 zeigt einen am axial hinteren, saugseitigen Ende der Fluidpumpe 70 angebrachte Luftpumpenanordnung 140.

Die Luftpumpenanordnung 140 ist mit einem Luftraum 142 der flexiblen Dichtanordnung 115, d.h. einem Raum im Inneren des Balgenabschnittes 116 verbunden. Die Luftpumpenanordnung 140 beinhaltet einen Luftlagerkanal 144, der zumindest einen Abschnitt der aus dem Pumpengehäuse 72 herausragenden Kolbenstange umgibt und dazu ausgelegt ist, diesen Kolbenstangenabschnitt durch Luft zu lagern. Aus Übersichtsgründen ist eine Aktuatorik zum Betätigen der Kolbenstange 94 nicht dargestellt.

Der Luftlagerkanal 144 ist über eine Dichtung 146 gegenüber der Außenseite des Pumpengehäuses 72 abgedichtet.

Ferner beinhaltet die Luftpumpenanordnung 140 vorzugsweise ein erstes Rückschlagventil 148, das einer Saugseite des Luftlagerkanals 144 zugeordnet ist, und ein zweites Rückschlagventil 150, das einer Druckseite des Luftlagerkanals 144 zugeordnet ist.

Das erste Rückschlagventil 148 kann beispielsweise in dem Pumpengehäuse 72 integriert sein und einen Sauganschluss mit der Öffnung 96 verbinden. Das zweite Rückschlagventil 150 kann an einem Austrittsende des Luftlagerkanals 144 verbunden sein sowie mit einer Auslassöffnung.

Bei Bewegungen des Kolbens wird das Volumen des Luftraumes 142 verändert. Hierdurch wird auch der Druck im Inneren des Luftlagerkanals 144 verändert, was dazu führt, dass in einem Takt Luft über das erste Rückschlagventil 148 angesaugt wird und in einem entgegengesetzten Takt Luft über das zweite Rückschlagventil 150 ausgestoßen wird.

Um dabei zu erreichen, dass die in den Luftlagerkanal 144 eintretende Luft (oder ein anderes Gas) den Abschnitt der Kolbenstange 94 vollständig umgibt, kann an dem Außenumfang des Abschnittes der Kolbenstange 94 eine Luftführungsnut 192 vorgesehen sein, die beispielsweise wie ein gezogener Gewehrlauf ausgebildet ist.

## Patentansprüche

1. Rückschlagventil (10) zur Anordnung zwischen einem ersten Druckraum (14), in dem ein erster Druck (P₁) eines Fluides (30) herrscht, und einem zweiten Druckraum (16), in dem ein zweiter Druck (P₂) herrscht, mit einem Ventilgehäuse (12), an dem ein Ventilsitz (18) ausgebildet ist, und mit einem Sperrelement (22), das in einer Sperrposition dazu ausgelegt ist, eine Ventilöffnung (19) im Bereich des Ventilsitzes (18) zu verschließen, um eine Verbindung zwischen dem ersten und dem zweiten Ventilraum (14, 16) zu sperren, wenn der zweite Druck (P₂) größer ist als der erste Druck (P₁), und in einer Öffnungsposition dazu ausgelegt ist, die Ventilöffnung (19) freizugeben, um die Verbindung zwischen dem ersten und dem zweiten Ventilraum (14, 16) freizugeben, wenn der erste Druck (P₁) größer ist als der zweite Druck (P₂), wobei das Fluid (30) in der Öffnungsposition entlang einer Strömungsrichtung (S) von dem ersten Druckraum (14) in den zweiten Druckraum (16) strömen kann,
wobei
der Ventilsitz (18) als Schrägfläche ausgebildet ist, die in Bezug auf die Strömungsrichtung (S) unter einem Winkel (α) größer als 15° und kleiner als 80° ausgerichtet ist, wobei das Sperrelement (22) einen flächigen Sperrlappen (24) aus einem elastisch verformbaren Material aufweist, der in der Sperrposition an der Schrägfläche anliegt und in der Öffnungsposition aufgrund der Differenz zwischen dem ersten Druck (P₁) und dem zweiten Druck (P₂) von der Schrägfläche abhebt, um die Verbindung freizugeben, wobei das Sperrelement (22) einen Befestigungsabschnitt (26) aufweist, mittels dessen das Sperrelement (22) an dem Ventilgehäuse (12) befestigt ist,
**dadurch gekennzeichnet, dass**
der Befestigungsabschnitt (26) einen Ringabschnitt (56) aufweist, der in eine ringförmige Befestigungsausnehmung (50) des Ventilgehäuses (12) eingesetzt ist.

2. Rückschlagventil nach Anspruch 1, **dadurch gekennzeichnet, dass** der Winkel (α) größer als 30° und/oder kleiner 60° ist.

3. Rückschlagventil nach Anspruch 1 oder 2, **dadurch gekennzeichnet, dass** das Sperrelement (22) an einem in Strömungsrichtung (S) gesehen hinteren Bereich der Schrägfläche an dem Ventilgehäuse (12) festgelegt ist.

4. Rückschlagventil nach einem der Ansprüche 1 - 3, **dadurch gekennzeichnet, dass** der Ventilsitz (18) zwei Schrägflächen aufweist, die in entgegengesetzter Richtung geneigt sind und im Längsschnitt eine V-Form bilden, wobei jeder Schrägfläche ein Sperrlappen (24A, 24B) zugeordnet ist.

5. Rückschlagventil nach Anspruch 4, **dadurch gekennzeichnet, dass** die zwei Sperrlappen (24A, 24B) einstückig miteinander verbunden sind.

6. Rückschlagventil nach einem der Ansprüche 1 - 5, **dadurch gekennzeichnet, dass** das Ventilgehäuse (12) eine Befestigungsausnehmung (50) aufweist, die quer zur Strömungsrichtung (S) ausgerichtet ist, wobei der Befestigungsabschnitt (26) in die Befestigungsausnehmung (50) eingesetzt ist, um das Sperrelement (22) in Strömungsrichtung (S) formschlüssig an dem Ventilgehäuse (12) festzulegen.

7. Rückschlagventil nach einem der Ansprüche 1 bis 6, **dadurch gekennzeichnet, dass** der Ringabschnitt (56) über wenigstens einen Längsstegabschnitt (58) mit dem Sperrlappen (22) verbunden ist

8. Rückschlagventil nach Anspruch 7, **dadurch gekennzeichnet, dass** der Längsstegabschnitt (58) in einer längs ausgerichteten Ausnehmung (63) des Ventilgehäuses (12) angeordnet ist.

9. Rückschlagventil nach einem der Ansprüche 1 bis 8, **dadurch gekennzeichnet, dass** zwei Sperrlappen (24A, 24B) in einem Quersteg (48) miteinander verbunden sind, dessen Enden (62) jeweils über einen Längsstegabschnitt (58) mit dem Ringabschnitt (56) verbunden sind.

10. Rückschlagventil nach einem der Ansprüche 1 - 9, **dadurch gekennzeichnet, dass** das Ventilgehäuse (12) einen Zylinderabschnitt (53) aufweist, der wenigstens einen mit der Ventilöffnung (19) verbundenen Längskanal (20) aufweist, wobei der Ventilsitz (18) an einer in Strömungsrichtung (S) gesehen vorderen Stirnseite des Zylinderabschnittes (53) ausgebildet ist.

11. Fluidpumpe (70) mit einem Pumpengehäuse (72) und einem darin verschieblich gelagerten Kolben (90), der mit dem Pumpengehäuse (72) einen Druckraum (108) bildet, wobei ein Sauganschluss (104) der Pumpe (70) über ein erstes Rückschlagventil (106) mit dem Druckraum (108) verbunden ist und wobei der Druckraum (108) über ein zweites Rückschlagventil (110) mit einem Druckanschluss (112) der Pumpe (70) verbunden ist, wobei der Sauganschluss (104) mit einem Ausgleichsraum (114) verbunden ist, in den hinein Fluid (30) gelangt, das zwischen dem Kolben (90) und dem Pumpengehäuse (72) austritt,
**dadurch gekennzeichnet, dass**
das erste und/oder das zweite und/oder das dritte Rückschlagventil (106, 110, 111) als Rückschlagventil (10) gemäß einem der Ansprüche 1 - 10 ausgebildet ist.

12. Fluidpumpe nach Anspruch 11, **dadurch gekennzeichnet, dass** eine Kolbenstange (94) des Kolbens (90) im Bereich des Ausgleichsraumes (114) durch eine Kolbenstangenöffnung (96) hindurch aus dem Pumpengehäuse (72) herausgeführt ist.

13. Fluidpumpe nach Anspruch 12, **dadurch gekennzeichnet, dass** eine Außenseite des Kolbens (90) gegenüber der Kolbenstangenöffnung (96) mittels einer flexiblen Dichtanordnung (115) abgedichtet ist.

14. Fluidpumpe nach einem der Ansprüche 11 - 13, **dadurch gekennzeichnet, dass** der Kolben (90) gegenüber dem Pumpengehäuse (72) mittels eines Ringdichtelementes (100) abgedichtet ist, das eine zur Druckseite hin offene axiale Ringausnehmung (126) aufweist, über die das unter Druck stehende Fluid (30) eine ringförmige Dichtlippe (118) in radialer Richtung nach innen drücken kann.

15. Fluidpumpe nach einem der Ansprüche 11 - 14, **dadurch gekennzeichnet, dass** das Pumpengehäuse (72) ein Hauptgehäuse (74), an dem der Kolben (90) verschieblich gelagert ist, einen druckseitigen Deckel (76) und einen saugseitigen Deckel (78) aufweist, wobei die Deckel (76, 78) an axial gegenüberliegenden Enden mit dem Hauptgehäuse (74) verbunden sind.

## Claims

1. A check valve (10) for arranging between a first pressure chamber (14), in which a first pressure (P₁) of a fluid (30) prevails, and a second pressure chamber (16) in which a second pressure (P₂) prevails, comprising a valve housing (12) on which a valve seat (18) is formed, and comprising a blocking element (22) which is designed in a blocking position to close a valve opening (19) in the region of the valve seat (18), in order to block a connection between the first and the second valve chambers (14, 16), when the second pressure (P₂) is greater than the first pressure (P₁), and is designed in an open position to release the valve opening (19) in order to release the connection between the first and the second valve chambers (14, 16) when the first pressure (P₁) is greater than the second pressure (P₂), the fluid (30) being able to flow in the open position in a flow direction (S) from the first pressure chamber (14) into the second pressure chamber (16),
wherein
the valve seat (18) is configured as an oblique surface, which is aligned relative to the flow direction (S) at an angle (α) which is greater than 15° and less than 80°, the blocking element (22) comprising a planar blocking lobe (24) made from an elastically deformable material which in the blocking position bears against the oblique surface, and in the open position, due to the difference between the first pressure (P₁) and the second pressure (P₂), lifts away from the oblique surface in order to release the connection, wherein the blocking element (22) has a fastening portion (26), by means of which the blocking element (22) is fastened to the valve housing (12),
**characterized in that**
the fastening portion (26) comprising an annular portion (56), which is inserted into an annular fastening recess (50) of the valve housing (12).

2. The check valve as claimed in claim 1, **characterized in that** the angle (α) is greater than 30° and/or less than 60°.

3. The check valve as claimed in claim 1 or 2, **characterized in that** the blocking element (22) is secured at a rear region of the oblique surface viewed in the flow direction (S) to the valve housing (12).

4. The check valve as claimed in one of claims 1 - 3, **characterized in that** the valve seat (18) has two oblique surfaces, which are inclined in opposing directions and in longitudinal section form a V-shape, a blocking lobe (24A, 24B) being associated with each oblique surface.

5. The check valve as claimed in claim 4, **characterized in that** the two blocking lobes (24A, 24B) are integrally connected together.

6. The check valve as claimed in one of claims 1 - 5, **characterized in that** the valve housing (12) has a fastening recess (50), which is aligned transversely to the flow direction (S), the fastening portion (26) being inserted into the fastening recess (50) in order to secure the blocking element (22) in the flow direction (S) positively to the valve housing (12).

7. The check valve as claimed in one of claims 1 - 6, **characterized in that** the annular portion (56) is connected to the blocking lobe (22) via at least one longitudinal web portion (58).

8. The check valve as claimed in claim 7, **characterized in that** the longitudinal web portion (58) is arranged in a longitudinally aligned recess (63) of the valve housing (12).

9. The check valve as claimed in one of claims 1 to 8, **characterized in that** two blocking lobes (24A, 24B) are connected together in a transverse web (48), the ends (62) thereof in each case being connected to the annular portion (56) via a longitudinal web portion (58).

10. The check valve as claimed in one of claims 1 - 9, **characterized in that** the valve housing (12) has a cylindrical portion (53), which has at least one longitudinal channel (20) connected to the valve opening (19), the valve seat (18) being configured on a front face of the cylindrical portion (53) viewed in the flow direction (S).

11. A fluid pump (70) comprising a pump housing (72) and a piston (90) displaceably mounted therein, which forms with the pump housing (72) a pressure chamber (108), a suction terminal (104) of the pump (70) being connected to the pressure chamber (108) via a first check valve (106) and the pressure chamber (108) being connected to a pressure terminal (112) of the pump (70) via a second check valve (110), wherein the suction connector (104) is connected to a compensating chamber (114) into which fluid (30) which escapes between the piston (90) and the pump housing (72) passes,
**characterized in that**
the first and/or the second and/or the third check valve (106, 110, 111) is configured as a check valve (10) as claimed in one of claims 1 - 10.

12. The fluid pump as claimed in claim 11, **characterized in that** a piston rod (94) of the piston (90) is guided in the region of the compensating chamber (114) through a piston rod opening (96) from the pump housing (72).

13. The fluid pump as claimed in claim 12, **characterized in that** an outer face of the piston (90) is sealed relative to the piston rod opening (96) by means of a flexible sealing arrangement (115).

14. The fluid pump as claimed in one of claims 11 -13, **characterized in that** the piston (90) is sealed relative to the pump housing (72) by means of an annular sealing element (100), which has an axial annular recess (126) open toward the pressure side, via which the pressurized fluid (30) may press an annular sealing lip (118) inwardly in the radial direction.

15. The fluid pump as claimed in one of claims 11 -14, **characterized in that** the pump housing (72) has a main housing (74) on which the piston (90) is displaceably mounted, a cover (76) on the pressure side and a cover (78) on the suction side, the covers (76, 78) being connected to the main housing (74) on axially opposing ends.

## Revendications

1. Soupape de non-retour (10) à installer entre une première chambre sous pression (14), dans laquelle règne une première pression (P₁) d'un fluide (30), et une deuxième chambre sous pression (16), dans laquelle règne une deuxième pression (P₂), avec un boîtier de soupape (12), sur lequel est formé un siège de soupape (18), et avec un élément de fermeture (22) qui, dans une position de fermeture, est conçu pour fermer une ouverture de soupape (19) dans la région du siège de soupape (18) afin de fermer une communication entre la première et la deuxième chambres sous pression (14, 16) lorsque la deuxième pression (P₂) est plus élevée que la première pression (P₁), et qui, dans une position d'ouverture, est conçu pour libérer l'ouverture de soupape (19) afin de libérer la communication entre la première et la deuxième chambres sous pression (14, 16) lorsque la première pression (P₁) est plus élevée que la deuxième pression (P₂), le fluide (30) pouvant s'écouler, dans la position d'ouverture, le long d'une direction d'écoulement (S) de la première chambre sous pression (14) dans la deuxième chambre sous pression (16),
dans laquelle
le siège de soupape (18) est réalisé sous la forme d'une face inclinée qui, par rapport à la direction d'écoulement (S), est orientée sous un angle (□) supérieur à 15° et inférieur à 80°, l'élément de fermeture (22) présentant un volet de fermeture plat (24) en un matériau élastiquement déformable qui, dans la position de fermeture, est appliqué sur la face inclinée et qui, dans la position d'ouverture, se soulève de la face inclinée en raison de la différence entre la première pression (P₁) et la deuxième pression (P₂), l'élément de fermeture (22) présentant une partie de fixation (26), au moyen de laquelle l'élément de fermeture (22) est fixé au boîtier de soupape (12),
**caractérisée en ce que**
la partie de fixation (26) présente une partie annulaire (56), qui est insérée dans un évidement de fixation annulaire (50) du boîtier de soupape (12).

2. Soupape de non-retour selon la revendication 1, **caractérisée en ce que** l'angle (□) est supérieur à 30° et/ou inférieur à 60°.

3. Soupape de non-retour selon la revendication 1 ou 2, **caractérisée en ce que** l'élément de fermeture (22) est fixé au boîtier de soupape (12) dans une région arrière de la face inclinée, considérée dans la direction d'écoulement (S).

4. Soupape de non-retour selon l'une quelconque des revendications 1 à 3, **caractérisée en ce que** le siège de soupape (18) présente deux faces inclinées, qui sont inclinées en direction opposée et qui forment un V en coupe longitudinale, un volet de fermeture (24A, 24B) étant associé à chaque face inclinée.

5. Soupape de non-retour selon la revendication 4, **caractérisée en ce que** les deux volets de fermeture (24A, 24B) sont attachés l'un à l'autre en une seule pièce.

6. Soupape de non-retour selon l'une quelconque des revendications 1 à 5, **caractérisée en ce que** le boîtier de soupape (12) présente un évidement de fixation (50), qui est orienté transversalement à la direction d'écoulement (S), la partie de fixation (26) étant insérée dans l'évidement de fixation (50) afin de maintenir l'élément de fermeture (22) dans la direction d'écoulement (S) par emboîtement sur le boîtier de soupape (12).

7. Soupape de non-retour selon l'une quelconque des revendications 1 à 6, **caractérisée en ce que** la partie annulaire (56) est reliée au volet de fermeture (22) par au moins une partie de nervure longitudinale (58).

8. Soupape de non-retour selon la revendication 7, **caractérisée en ce que** la partie de nervure longitudinale (58) est disposée dans un évidement orienté longitudinalement (63) du boîtier de soupape (12).

9. Soupape de non-retour selon l'une quelconque des revendications 1 à 8, **caractérisée en ce que** deux volets de fermeture (24A, 24B) sont reliés l'un à l'autre dans une nervure transversale (48), dont les extrémités (62) sont respectivement reliées à la partie annulaire (56) par une partie de nervure longitudinale (58).

10. Soupape de non-retour selon l'une quelconque des revendications 1 à 9, **caractérisée en ce que** le boîtier de soupape (12) présente une partie cylindrique (53), qui présente au moins un canal longitudinal (20) relié à l'ouverture de soupape (19), le siège de soupape (18) étant formé sur une face frontale avant de la partie cylindrique (53), considérée dans la direction d'écoulement (S).

11. Pompe à fluide (70) avec un boîtier de pompe (72) et un piston (90) monté de façon déplaçable dans celui-ci, qui forme une chambre sous pression (108) avec le boîtier de pompe (72), un raccord d'aspiration (104) de la pompe (70) étant raccordé à la chambre sous pression (108) par une première soupape de non-retour (106) et la chambre sous pression (108) étant raccordée par une deuxième soupape de non-retour (110) à un raccord de refoulement (112) de la pompe (70), le raccord d'aspiration (104) étant raccordé à une chambre d'équilibrage (114), dans laquelle arrive du fluide (30) qui sort entre le piston (90) et le boîtier de pompe (72),
**caractérisée en ce que**
la première et/ou la deuxième et/ou la troisième soupape de non-retour (106, 110, 111) est constituée par une soupape de non-retour (10) selon l'une quelconque des revendications 1 à 10.

12. Pompe à fluide selon la revendication 11, **caractérisée en ce qu'**une tige de piston (94) du piston (90) sort du boîtier de pompe (72) à travers une ouverture de tige de piston (96) dans la région de la chambre d'équilibrage (114).

13. Pompe à fluide selon la revendication 12, **caractérisée en ce qu'**un côté extérieur du piston (90) est étanche par rapport à l'ouverture de tige de piston (96) au moyen d'un agencement de joint souple (115).

14. Pompe à fluide selon l'une quelconque des revendications 11 à 13, **caractérisée en ce que** le piston (90) est étanche par rapport au boîtier de pompe (72) au moyen d'un élément d'étanchéité annulaire (100), qui présente un évidement annulaire axial (126) ouvert en direction du côté de refoulement, par lequel le fluide se trouvant sous pression (30) peut refouler vers l'intérieur en direction radiale une lèvre d'étanchéité annulaire (118).

15. Pompe à fluide selon l'une quelconque des revendications 11 à 14, **caractérisée en ce que** le boîtier de pompe (72) présente un boîtier principal (74), dans lequel le piston (90) est monté de façon déplaçable, un couvercle côté refoulement (76) et un couvercle côté aspiration (78), les couvercles (76, 78) étant attachés au boîtier principal (74) à deux extrémités axialement opposées.
